Europäisches Patentamt

European Patent Office

Office européen des brevets

(19)

(11) Veröffentlichungsnummer: **0 121 756**

**B1**

(12) **EUROPÄISCHE PATENTSCHRIFT**

(45) Veröffentlichungstag der Patentschrift:
21.09.88

(21) Anmeldenummer: 84102359.1

(22) Anmeldetag: 05.03.84

(51) Int. Cl.⁴: **C 08 F 10/02,** C 08 F 4/34

┌─────────────────┐
│ E R R A T U M │
└─────────────────┘

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | LAUTET BERICHTIGT:<br>SHOULD READ :<br>DEVRAIT ETRE LU · |
|---|---|---|---|
| mit Ethylen copolymerisierbaren | 2 | 4 | mit Ethylen-copolymerisierbaren |
| nachgeschalteten Abscheidern, | 3 | 60 | nachgeschalteten Abscheidern |
| Temperaturmaximum von 329°C, im zweiten Teil des Reaktors ein Temperaturmaximum von 329°C, im zweiten | 4 | 21 | Temperaturmaximum von 329°C, im zweiten |
| mit Ethylen copolymerisierbaren | 4 | 62 | mit·Ethylen-copolymerisierbaren |

Tag der Entscheidung<br>über die Berichtigung )<br>Date of decision on<br>rectification: ) 10.04.89<br>Date de décision portant )<br>sur modification: )

Ausgabe- und Ver-<br>öffentlichungstag: )<br>Issue and publication )<br>date: ) 14.06.89<br>Date d'edition et de )<br>publication: )

Patbl.Nr)

EPB no: )89/24
Bull. no:)

**Europäisches Patentamt**

**European Patent Office**

**Office européen des brevets**

(11) Veröffentlichungsnummer: **0 121 756**

**B1**

(12)

# EUROPÄISCHE PATENTSCHRIFT

(45) Veröffentlichungstag der Patentschrift: **21.09.88**

(51) Int. Cl.⁴: **C 08 F 10/02, C 08 F 4/34**

(21) Anmeldenummer: **84102359.1**

(22) Anmeldetag: **05.03.84**

(54) **Verfahren zur Herstellung von Ethylenpolymerisaten bei Drücken oberhalb von 500 bar in einem Einzonen-Rohrreaktor.**

(30) Priorität: **12.03.83 DE 3308926**

(43) Veröffentlichungstag der Anmeldung:
**17.10.84 Patentblatt 84/42**

(45) Bekanntmachung des Hinweises auf die Patenterteilung:
**21.09.88 Patentblatt 88/38**

(84) Benannte Vertragsstaaten:
**AT BE DE FR GB NL**

(56) Entgegenhaltungen:
**DE-A-2 558 266**
**FR-A-2 335 531**

(73) Patentinhaber: **BASF Aktiengesellschaft, Carl-Bosch- Strasse 38, D-6700 Ludwigshafen (DE)**

(72) Erfinder: **Brandstetter, Franz, Dr., Ritterbueschel 45, D-6730 Neustadt (DE)**
Erfinder: **Werner, Michael, Dr., c/o Pharma Natura P.O. Box 5502, 2000 Johannesburg (ZA)**
Erfinder: **Siebenhandl, Hans Werner, Am Kuckucksbusch 1, D-5357 Swisttal 1 (DE)**
Erfinder: **Boettcher, Klaus, Dr., Hubertusstrasse 57, D-5047 Wesseling (DE)**

# 0 121 756

## Beschreibung

Die Erfindung betrifft ein Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen, rohrförmigen Polymerisationssystem bei Drücken von 500 bis 5000 bar und Temperaturen von 40 bis 450°C in Gegenwart von radikalisch zerfallenden Polymerisationsinitiatoren, indem man dem Polymerisationssystem an dessen Einlaßstelle ein Gemisch aus Ethylen, Sauerstoff, gegebenenfalls Regler und gegebenenfalls Comonomer und zusätzlich an einer zweiten Stelle hinter der Einlaßstelle entlang des Polymerisationssystems, an der die Temperatur der sauerstoffinitiierten Reaktion bereits das Maximum überschritten hat, einen Peroxidinitiator zuführt.

Bei derartigen Verfahren sind Maßnahmen erforderlich, die Eigenschaften der durch Hochdruckpolymerisation entstehenden Ethylenpolymerisate durch Veränderung der Polymerisationsbedingungen zu variieren. Hierzu können in kontinuierlich arbeitenden Rohrreaktoren bei Umstellung von einem Produkttyp auf einen anderen z. B. die Zuführbedingungen der Polymerisationsinitiatoren geändert werden.

Es ist bekannt, daß man Ethylen in rohrförmigen Polymerisationssystemen bei Drücken von 500 bis 5000 bar und Temperaturen von 50 bis 450°C in Gegenwart von radikalisch zerfallenden Polymerisationsinitiatoren, wie Sauerstoff oder peroxidischen Initiatoren, gegebenenfalls in Gegenwart von Reglern und Anwesenheit von Coreaktanten polymerisieren kann. Es ist auch bekannt, daß man bei der Hochdruckpolymerisation von Ethylen in rohrförmigen Reaktoren an mehreren in der Strömungsrichtung des Ethylens hintereinanderliegenden Stellen Katalysatoren der genannten Art in gelöster oder suspendierter Form in den Reaktor einleiten kann (vgl. GB-PS-1 010 847). Bei diesem Verfahren kann jedoch die Temperatur im Reaktor nicht zuverlässig über längere Zeit kontrolliert werden, was zum Verkohlen des Reaktionsgemisches und zum Verstopfen des Reaktors führt.

Man hat auch schon bei der Hochdruckpolymerisation von Ethylen den die Katalysatoren enthaltenden Ethylenstrom in mehrere Teilströme aufgeteilt und dann einen dieser Teilströme nach dem Erwärmen auf Anspringtemperatur in den Anfang eines röhrenförmigen Reaktors eingeleitet. Der andere beziehungsweise die anderen Teilströme werden dann bei diesen bekannten Verfahren kalt an mehreren in Strömungsrichtung des polymerisierenden Ethylens hintereinanderliegenden Stellen des Reaktors zugeführt. Das kalte Ethylen wird dabei üblicherweise an den Stellen des Reaktors eingeleitet, an denen das Polymerisationsgemisch im Reaktor etwa die maximal zulässige Polymerisationstemperatur erreicht hat. Dabei wird die Menge des kalt eingeleiteten Ethylens, welches den Initiator enthält, so bemessen, daß die Temperatur des Reaktionsgemisches im Reaktor nicht unter die Anspringtemperatur der Ethylenpolymerisation, die von dem verwendeten Katalysator abhängt, sinkt. Auf diese Weise ist es unter besonderen Bedingungen möglich, den Umsatz des Ethylens zu Polyethylen pro Durchsatz zu erhöhen. Bei diesem Verfahren werden dem Ethylen vor oder nach der Komprimierung geringe Mengen Luftsauerstoff als Polymerisationsinitiator zugegeben. Auch können statt Luftsauerstoff organische Peroxide oder Hydroperoxide oder Mischungen von Peroxidverbindungen zugeführt werden (vgl. US-PS-3 725 378).

Ferner läßt sich durch Kombination von Sauerstoff und Methylisobutylketonperoxid als Initiatoren bei einem Einsatz von Sauerstoff und Peroxiden an einer zweiten Zulaufstelle in dem Reaktor der Reaktorumsatz anheben, ohne daß es zu einer merklichen Produktverschlechterung kommt (vgl. US-PS-4 076 919). Durch diese Verfahrensweise läßt sich die Qualität des Polymerisates jedoch nicht verbessern.

Es ist ebenfalls bekannt, daß man durch die Kombination von Sauerstoff und Methylisobutylketonperoxid als Initiator und Dosierung dieses Initiatorgemisches an der Einlaßstelle des Reaktors den Reaktionsumsatz unter Beibehaltung der Produktqualität anheben kann. Unter bestimmten Umständen können dabei sogar die Produkteigenschaften verbessert werden, wobei jedoch grundsätzlich Produkte erhalten werden, die zwar eine hohe Produktdichte, jedoch schlechte optische Folieneigenschaften aufweisen (vgl. US-PS-3 660 370, Beispiel 3).

Man kann auch Ethylenpolymerisate beziehungsweise Copolymerisate von Ethylen mit ethylencopolymerisierbaren Verbindungen in einem kontinuierlich betriebenen, rohrförmigen Polymerisationssystem dadurch herstellen, daß man im Polymerisationssystem an dessen Einlaßstelle (A) und gleichzeitig an einer zweiten Stelle (C) hinter der Einlaßstelle entlang des Polymerisationssystems, wo die Reaktionstemperatur ein Maximum überschritten hat, ein Gemisch aus Ethylen, Sauerstoff, gegebenenfalls Regler und gegebenenfalls Comonomere zuführt, wobei man zusätzlich an einer weiteren Stelle (B) des Reaktors, an der die Temperatur der sauerstoffinitiierten Reaktion bereits das Maximum überschritten hat, und die zwischen den Einlaßstellen (A) und (C) liegt, Methylisobutylketonperoxid zudosiert (vgl. DE-OS-3 141 507). Hierbei wird zwar ein höherer Umsatz des Ethylens zu Polyethylen erhalten, für manche Anwendungsbereiche sind aber die optischen Folieneigenschaften, das Schweißverhalten und die Ausziehfähigkeit der Polyethylenfolien noch ungenügend. Aus wirtschaftlichen Gründen ist es auch erstrebenswert, den Umsatz des Ethylens zu Polyethylen noch weiter zu erhöhen.

Der vorliegenden Erfindung liegt die Aufgabe zugrunde, ein Ethylenhochdruckpolymerisationsverfahren der eingangs beschriebenen Art aufzufinden, bei dem in hoher Ausbeute Ethylenpolymerisate mit guten optischen Folieneigenschaften und guter Ausziehfähigkeit der Folien erhalten werden.

Diese Aufgaben werden erfindungsgemäß dadurch gelöst, daß an der zweiten Zuführstelle des Polymerisationssystems die Temperatur im Polymerisationssystem im Bereich von 261 bis 274, bevorzugt 262 bis 270°C, liegt und Methylisobutylketonperoxid, gelöst in einem inerten Lösungsmittel, zugeführt wird.

2

Das Verfahren ist bevorzugt auf die Homopolymerisation von Ethylen aber auch auf die Copolymerisation des Ethylens mit anderen ethylencopolymerisierbaren Verbindungen anwendbar. Als solche kommen alle die Verbindungen in Frage, die üblicherweise unter Hochdruckbedingungen mit Ethylen in Gegenwart von Radikale bildenden Polymerisationsinitiatoren copolymerisiert werden können. Solche Verbindungen sind z. B. Vinylacetat, n-Butylacrylat, Methylacrylat, Acrylnitril, Vinylether, Acrylsäure oder Acrylamid, wobei der Anteil an Comonomeren im Copolymerisat maximal 20 Gew.-% betragen sollte. Bevorzugt sind Copolymerisate mit einem Comonomeranteil im Copolymerisat von maximal 10 Gew.-%.

Die Polymerisation des Ethylens, gegebenenfalls zusammen mit anderen Verbindungen, erfolgt bei Drücken von 500 bis 5000 bar, vorzugsweise 1500 bis 3000 bar. Die Temperaturen im Polymerisationssystem liegen zwischen 40 und 450°C, vorzugsweise zwischen 150 und 350°C. Die mittleren Verweilzeiten betragen üblicherweise 30 bis 120 Sekunden. Dabei ist die mittlere Verweilzeit definiert durch das Verhältnis des Apparatevolumens zu dem im Mittel pro Zeiteinheit durch das Apparatevolumen hindurchgetretene Produktvolumen. Die Bedingungen im Polymerisationssystem lassen sich apparativ in sogenannten Rohrreaktoren einstellen. Unter Rohrreaktoren versteht man rohrförmige Polymerisationsgefäße, deren Längenausdehnung das über 2000 fache, bevorzugt das 5000- bis 50 000 fache des Rohrdurchmessers beträgt. Wie üblich, wird ein Teil der Polymerisationswärme durch Kühlung des Rohrreaktors von außen mit Wasser abgeführt. Die Polymerisation des Ethylens beziehungsweise des Ethylens mit Comonomeren im Rohrreaktor wird kontinuierlich betrieben (vgl. "Ullmann's Encyklopädie der technischen Chemie", Verlag Chemie GmbH, D-6940 Weinheim, Band 19, (1980), Seiten 169 bis 195).

Die Polymerisation des Ethylens gemäß vorliegendem Verfahren wird durch Zufuhr von Luftsauerstoff initiiert, wobei die Sauerstoffkonzentration 0,5 bis 100, bevorzugt 0,5 bis 50 mol ppm, bezogen auf die Menge an Ethylen, beträgt. Das gasförmige Gemisch aus Ethylen und Sauerstoff, das gegebenenfalls Regler und Comonomere enthalten kann, wird an der Einlaßstelle dem Reaktor zugeführt. Unter Einlaßstelle wird im allgemeinen der Anfang des rohrförmigen Reaktors verstanden. Es handelt sich also bei dem erfindungsgemäß zu verwendenden rohrförmigen Reaktor um einen Einzonen-Rohrreaktor.

Durch die üblichen Regler, zum Beispiel Kohlenwasserstoffe wie Propan, Propen usw., Ketone wie Aceton, Methylethylketon usw. oder Aldehyde wie Propionaldehyd kann das Molekulargewicht des anfallenden Polymerisats auf den gewünschten Wert gebracht werden.

In dem erfindungsgemäß verbesserten Verfahren wird nun an einer weiteren Reaktorstelle, an der das Temperaturmaximum der sauerstoffinitiierten Reaktion überschritten ist, zusätzlich noch Methylisobutylketonperoxid, das in einem inerten Lösungsmittel gelöst ist, an der Reaktorstelle eingeführt, wo die Temperatur im Bereich von 261 bis maximal 274°C, vorzugsweise bei 262 bis 270°C liegt. Es ist von Vorteil, wenn die Konzentration des zusätzlich zugeführten Initiators 0,01 bis 20 mol ppm, vorzugsweise 0,01 bis 5 mol ppm, bezogen auf die gesamte, dem Polymerisationssystem zugeführte Menge Ethylen, beträgt.

Als geeignetes inertes Lösungsmittel für das Methylisobutylketonperoxid werden zweckmäßig aliphatische Kohlenwasserstoffe wie Oktan oder Benzin verwendet. Es können gegebenenfalls auch andere inerte Lösungsmittel, wie Chlorbenzol, Cyclohexan oder Methanol, eingesetzt werden. Die für das Zuführen der Initiatoren erforderlichen Mengen an Lösungsmittel sind im Verhältnis zur Menge Ethylen gering und betragen im allgemeinen 0,01 bis 5 Gew.-%, vorzugsweise 0,1 bis 2 Gew.-%, bezogen auf die Menge Reaktionsgas. Die Initiatoren enthaltende Lösung wird dabei an der geeigneten Stelle, d.h. nachdem die Temperatur der sauerstoffinitiierten Reaktion ein Maximum überschritten hat und die Temperatur im Bereich von 261 bis 274°C liegt, mit Hilfe von schnellaufenden Dosierpumpen direkt in das Reaktionsgemisch zudosiert (vgl. DE-OS-3 227 746).

Es ist ein Vorteil des erfindungsgemäßen Verfahrens, daß bei gleichzeitig hohem Umsatz des Ethylens ein Ethylenpolymerisat der Dichte 0,910 bis 0,935, vorzugsweise 0,915 bis 0,925 g/cm$^3$ (DIN 53 479) erhalten werden kann, das zu hohen optischen Folieneigenschaften und guter Ausziehfähigkeit der daraus hergestellten Folien führt.

In den folgenden Beispielen wird das erfindüngsgemäße Verfahren näher beschrieben.

Die Polymerisation wurde in allen Fällen in einem rohrförmigen Reaktor mit einem Längen-/Durchmesser-Verhältnis von etwa 15 000 durchgeführt. Zur Abführung der Polymerisationswärme wurden die Rohrwände von außen mit Wasser gekühlt. Das sauerstoffhaltige Ethylen wurde mit dem Molekulargewichtsregler versetzt, auf dem Reaktionsdruck komprimiert und der Einlaßstelle des Reaktors zugeführt. Nach dem Abklingen der Temperatur des Reaktionsgemisches, d.h. nach dem Temperaturmaximum der sauerstoffinitiierten Polymerisation wurde etwa in der Mitte des Reaktors an der zweiten Zuführstelle dem Reaktionsgemisch Peroxidlösung zugegeben, wodurch sich eine zweite Polymerisationszone mit einem neuen Temperaturmaximum ausbildete.

In einer Reihe von Versuchen wurde durch eine geeignete Maßnahme wie z. B. Änderung der Initiatormenge und/oder Änderung der Vorwärmer- oder Kühlwassertemperatur die Temperatur an der zweiten Zuführstelle variiert.

Das erhaltene Polyethylen wurde in bekannter Weise in den dem Reaktor nachgeschalteten Abscheidern, vom nicht umgesetzten Ethylen abgetrennt.

**Beispiel**

Dem oben beschriebenen Reaktor wird bei einem Reaktionsdruck von 2 750 bar, gemessen an der Einlaßstelle des Reaktors, ein Ethylenstrom, versetzt mit 7,2 mol ppm Luftsauerstoff, bezogen auf das Ethylen, an der Einlaßstelle zugeführt. Zusätzlich wird an einer zweiten Zuführstelle etwa in der Mitte des Rohrreaktors 0,53 mol ppm Methylisobutylketonperoxid, in verdünnter Form (Benzin), bezogen auf das Ethylen, zugeführt. Dadurch ergibt sich im 1. Teil des Reaktors ein Temperaturmaximum von 321°C, im zweiten Teil des Reaktors ein Temperaturmaximum von 310°C und eine Temperatur an der zweiten Einlaßstelle von 268°C. Als Molekulargewichtsregler wird Propionaldehyd zugesetzt. Die Reglermenge wird so bemessen, daß sich ein Molekulargewicht, entsprechend eines Schmelzindex MFI von 0,75 g/10 min, gemessen nach DIN 5 37 35, einstellt.

**Vergleichsbeispiel 1**

Dem Reaktor gemäß Beispiel werden bei einem Reaktionsdruck 2 750 bar, gemessen an der Einlaßstelle des Reaktors, ein Ethylenstrom, versetzt mit 9,1 mol ppm Sauerstoff, an der Einlaßstelle zugeführt. Zusätzlich wird an einer zweiten Zuführstelle etwa in der Mitte des Rohrreaktors 0,33 mol ppm Methylisobutylketonperoxid, bezogen auf das durchgesetzte Ethylen, zugeführt. Dadurch ergibt sich im 1. Teil des Reaktors ein Temperaturmaximum von 329°C, im zweiten Teil des Reaktors ein Temperaturmaximum von 329°C, im zweiten Teil des Reaktors ein Temperaturmaximum von 293°C und eine Temperatur an der zweiten Einlaßstelle von 286°C. Als Molekulargewichtsregler wird so viel Propionaldehyd zugesetzt, daß sich ein Molekulargewicht, entsprechend eines Schmelzindex MFI von 0,75 g/10 min, gemessen nach DIN 53 735, einstellt.

**Vergleichsbeispiel 2**

Dem Reaktor gemäß Beispiel werden bei einem Reaktionsdruck von 2 750 bar, gemessen an der Einlaßstelle des Reaktors, ein Ethylenstrom versetzt mit 7,9 mol ppm Sauerstoff an der Einlaßstelle zugeführt. Zusätzlich wird an einer zweiten Zuführstelle, etwa in der Mitte des Rohrreaktors, 0,43 mol ppm Methylisobutylketonperoxid in verdünnter Form (Benzin), bezogen auf das Ethylen, zugeführt. Dadurch ergibt sich im 1. Teil des Reaktors ein Temperaturmaximum von 321°C, im 2. Teil des Reaktors ein Temperaturmaximum von 300°C und eine Temperatur an der 2. Zuführstelle von 257°C. Als Molekulargewichtsregler wird so viel Propionaldehyd zugesetzt, daß sich ein Molekulargewicht entsprechend einem Schmelzindex MFI von 0,75 g/10 min, gemessen nach DIN 53 735, einstellt.

**Tabelle**

| Versuch | Umsatz[1] | Dichte[2] | Streu[3] | ME[4] |
|---|---|---|---|---|
| Beispiel | 22,7 | 0,9227 | 17 | 38 |
| Vergleichs-beispiel 1 | 20,0 | 0,9225 | 20 | 43 |
| Vergleichs-beispiel 2 | 21,0 | 0,9227 | 21 | 46 |

[1] Menge an Polymerisat, bezogen auf die Gesamtethylenmenge, angegeben in Gewichtsprozent
[2] Dichte des Polymerisats in $g/cm^3$ nach DIN 53 479
[3] Lichtstreuung der Folie in % nach DIN 53 490, vgl. Kunststoffe Bd. 56 (1968), S. 350 - 354
[4] Memory Effekt als Maß für die Strangaufweitung in % gemessen in Apparatur nach DIN 53735 bei konstanter Schergeschwindigkeit.

**Patentansprüche**

1. Verfahren zur Herstellung von Ethylenpolymerisaten durch Homopolymerisation von Ethylen oder Copolymerisation von Ethylen mit Ethylen copolymerisierbaren Verbindungen in einem kontinuierlich betriebenen, rohrförmigen Polymerisationssystem bei Drücken von 500 bis 5000 bar, und Temperaturen von 40 bis 450°C in Gegenwart von radikalisch zerfallenden Polymerisationsinitiatoren, indem man dem Polymerisationssystem an dessen Einlaßstelle ein Gemisch aus Ethylen, Sauerstoff, gegebenenfalls Regler und

4

**0 121 756**

gegebenenfalls Comonomer und zusätzlich an einer zweiten Stelle hinter der Einlaßstelle entlang des Polymerisationssystems, an der die Temperatur der sauerstoffinitiierten Reaktion bereits das Maximum überschritten hat, einen Peroxidinitiator zuführt, <u>dadurch gekennzeichnet,</u> daß an der zweiten Zuführstelle die Temperatur im Polymerisationssystem im Bereich von 261 bis 274°C liegt und Methylisobutylketonperoxid, gelöst in einem inerten Lösungsmittel, zugeführt wird.

2. Verfahren nach Anspruch 1, <u>dadurch gekennzeichnet,</u> daß an der zweiten Zuführstelle die Temperatur im Bereich von 262 bis 270°C liegt.

**Claims**

1. A process for the preparation of an ethylene polymer by homopolymerization of ethylene or copolymerization of ethylene with compounds which are copolymerizable with ethylene, in a continuously operated, tubular polymerization system under from 500 to 5000 bar and at from 40 to 450°C in the presence of a free radical polymerization initiator, by adding a mixture of ethylene, oxygen, if necessary a regulator and if necessary a comonomer to the polymerization system at its inlet point and furthermore adding a peroxide initiator to the polymerization system at a second point downstream of the inlet point along the polymerization system, at which the temperature of the oxygen-initiated reaction has already exceeded the maximum, wherein, at the second feed point, the temperature in the polymerization system is from 261 to 274°C and methyl isobutyl ketone peroxide, dissolved in an inert solvent, is added.

2. A process as claimed in claim 1, wherein the temperature is from 262 to 270°C at the second feed point.

**Revendications**

1. Procédé de préparation de polymères d'éthylène par homopolymérisation d'éthylène ou par copolymérisation d'éthylène avec des composés copolymérisables avec l'éthylène, dans un système de polymérisation tubulaire exploité en continu sous des pressions de 500 à 5000 bars et à des températures de 40 à 450°C, en présence d'initiateurs de polymérisation a décomposition radicalaire, procédé dans lequel on envoie dans le système de polymérisation, au point d'entrée de celui-ci, un mélange d'éthylène, d'oxygène, éventuellement de régulateur et éventuellement de comonomère, et en plus, en un second point en aval du point d'entrée le long du système de polymérisation, au niveau duquel le température de la réaction déclenchée par l'oxygène a déjà dépassé le maximum, un initiateur de la nature d'un peroxyde, caractérisé en ce qu'au second point d'admission, la température dans le système de polymérisation se situe dans la gamme de 261 à 274°C et du peroxyde de méthylisobutylcétone, en solution dans un solvant inerte, est introduit.

2. Procédé selon la revendication 1, caractérisé en ce qu'au second point d'admission, la température se situe dans la gamme de 262 à 270°C.